(19) Europäisches Patentamt
European Patent Office
Office européen des brevets

(11) Publication number: **0 002 104**
**B1**

# (12) EUROPEAN PATENT SPECIFICATION

(45) Date of publication of patent specification: **20.10.82**

(51) Int. Cl.$^3$: **C 09 K 3/34**, C 09 B 1/32, C 09 B 1/28, G 02 F 1/13

(21) Application number: **78300487.2**

(22) Date of filing: **11.10.78**

**(54) Pleochroic dyes suitable for use in solution with liquid crystal materials for electro-optic device applications.**

(30) Priority: **14.10.77 GB 4281077**

(43) Date of publication of application:
**30.05.79 Bulletin 79/11**

(45) Publication of the grant of the patent:
**20.10.82 Bulletin 82/42**

(84) Designated Contracting States:
**CH DE FR NL**

(56) References cited:
**DE - A - 2 627 215**
**FR - A - 2 211 154**
**FR - A - 2 243 980**

The file contains technical information submitted after the application was filed and not included in this specification

(73) Proprietor: **BDH Chemicals Limited**
**Broom Road**
**Poole, BH12 4NN (GB)**

(72) Inventor: **Constant, Jennifer**
**8, Bowling Green Road Powick**
**Worcester (GB)**
Inventor: **Pellatt, Martin Geoffrey**
**100 Sopwith Crescent**
**Wimborne Dorset (GB)**
Inventor: **Roe Iain Hugh Cunningham**
**30, Leigh Road**
**Wimborne Dorset (GB)**

(74) Representative: **Robinson, Frederick Robert**
**Procurement Executive Ministry of Defence**
**Patents 1 A (4) Room 1932, 19th Floor Empress State Building, Lillie Road**
**London SW6 1TR (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 002 104 B1**

# Pleochroic dyes suitable for use in solution with liquid crystal materials for electro-optic device applications

The present invention is concerned with pleochroic dyes suitable for use in solution with liquid crystal materials for electro-optic device applications.

Electro-optic display devices of certain known types depend upon liquid crystal properties displayed by certain compounds known as liquid crystal compounds or materials which display phases intermediate between the fully ordered crystalline state and the fully disordered liquid state, apart from certain temporary short range ordering that is present in most liquid phases.

Broadly speaking there are two principal types of liquid crystal phase, the smectic mesophase in which the molecular ordering is of a substantially lamellar type and the nematic mesophase in which the ordering is substantially linear. Included sometimes as a sub-class of the nematic mesophase and sometimes classified as a separate mesophase is the cholesteric mesophase. This last type has a helical order, arising from the presence of a chiral or optically active centre in the molecular composition of the material and this helical order is superimposed upon the linear order of the nematic mesophase.

Liquid crystal materials have the property of imposing their own ordering upon other molecules incorporated in the materials and having an appropriate molecular configuration or shape. This property is the basis of guest-host devices in which a "host" liquid crystal material has its orientation controlled by the application of electrical or magnetic fields and in turn imposes its order upon "guest" molecules of, for example, pleochroic dyes. These are dyes whose absorption properties vary with the orientation direction of the electric vector of light incident upon them relative to their own molecular alignment. A suitable pleochroic dye has an elongated rod-like molecule which absorbs relatively little light travelling in a direction parallel to the molecular axis but has a maximum absorption of light travelling in a direction perpendicular to the molecular axis.

Such dye molecules when placed in a liquid crystal material can adopt an orientation which follows the molecular orientation given to the crystal material and taking advantage of this two broad classes of guest-host device are possible based respectively upon a nematic (or Freedericksz effect) device and secondly upon a cholesteric-to-nematic phase-change device.

In a nematic device the liquid crystal material is originally oriented by known treatment of the inner surfaces of the container, e.g. glass plates bearing device electrodes, containing the liquid crystal material. This orientation is changed relative to the container, e.g. plate surfaces, by application of an electric field between the device electrodes. The guest dye material also changes its orientation resulting in a change in absorption of light passing along the axis of the electrical field giving a switchable electro-optic display.

In a cholesteric-to-nematic phase change device the liquid crystal material has positive dielectric anisotropy and is or includes an optically active compound which causes the material to exhibit a cholesteric mesophase having a long-pitch helical ordering of short range (the "focal conic" state). In the "off" state the device scatters incident light because the ordering is only short range. However when the device is switched on the electrical field applied across the material imposes a linear nematic order parallel to the electric field which results in orientation of any guest dye molecules also parallel to the electrical field and provides minimum absorption in that direction. Thus in the "on" state the device is less scattering and a switchable display is obtained between the "on" and "off" states. The dye enhances the contrast between the two states.

In order to provide maximum contrast between the two states it is important that the guest molecules adopt as closely as possible the time averaged orientation of the host, however this is achieved only to a limited degree because of random thermal fluctuations. The degree to which the orientation varies from the ideal is measured by a quantity known as the order parameter S which is given by the following equation:

$$S = \frac{1}{2} (3 \cos^2\theta - 1)$$

where $\cos^2\theta$ is a time average term and $\theta$ is the instantaneous angular orientation or the molecules with respect to the time averaged orientation of the host molecules. The determination of the value of the order parameter S is well understood in the art see for example the paper "A new absorptive mode reflective liquid crystal display device" by D L White and G N Taylor in the Journal of Applied Physics, 1974 *45* pages 4718 to 4723.

For perfect orientation the order parameter S is one (that is $\theta$ is zero) and pleichroic dyes for use in guest-host devices should have an order parameter in the liquid crystal host as near one as possible but they must also have adequate chemical, photochemical and electrochemical stability, e.g. stability when exposed to atmospheric contaminants, electrical fields (as in device operation) and to ultra-violet radiation. They should not be ionic or have any ionisable character and must also have sufficient solubility in the host materials although the concentrations of guest pleochroic dye required for the desired effect are generally quite small. The concentration is normally selected to ensure a light absorbance in the range of about 1.0 to 1.2 in the absorbing state of the cell, and of course depends

upon cell thickness and the absorption coefficient of the dye. Typically this gives concentrations of pleochroic dye of up to about 1% by weight of the host material.

Although a vast number of dyes are known only a relatively very small proportion of these would be of any practical utility in liquid crystal applications because only a very small proportion are for instance pleochroic, non-ionic and sufficiently soluble and capable of aligning in liquid crystal material.

Of the small number of dyes which have been found suitable in liquid crystal applications either the properties required for such applications have not been optimised or order parameters have been optimised at the expense of other important properties.

For example, the family of dyes containing chains of azo linked-phenyl rings described in DE—A—2 627 215 have members showing high order parameters but in general the stability of the compounds in this family is not particularly good.

Of the numerous dyes known in other fields many are known which are anthraquinones. It has been proposed in French Patent Specification No. 2 243 980 to use certain dyes of the anthraquinone family, namely certain 1,4-disubstituted and 1,8-disubstituted anthraquinones in liquid crystals. That French Specification describes using such dyes to give a new alignment mechanism in which the dye aligns with its molecular axis perpendicular to the liquid crystal molecular axis rather than in the conventional relationship with the dye and liquid crystal molecular axis parallel as described for example in the Journal of Applied Physics article referred to above.

The proposed perpendicular alignment is in fact highly inferior to the conventional parallel alignment both in theory and in practice. In theory the maximum order parameter obtainable with the perpendicular alignment mechanism is only 0.5. In practice the optical contrast between the 'on' and 'off' states of a cholesteric-to-nematic phase change effect cell using a liquid crystal/dye solution having the described perpendicular alignment is very poor. In confirmation, the order parameter of the dye 1,4-bis(n-butylamino)-anthraquinone for example has been measured and found to be only 0.16 in a biphenyl host E3 (composition given below).

It is an object of the invention to provide, for use in solution with liquid crystal material, dyes which show reasonable order parameters as well as reasonable chemical, electrochemical and photochemical stability.

In accordance with the present invention a liquid crystal material includes in solution therewith at least one pleochroic dye characterised in that the dye is an anthraquinone of general formula:

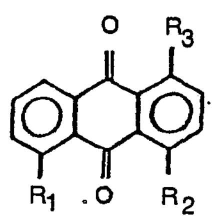

(I)

where $R_2$ is either hydrogen or a hydroxyl group, where $R_3$ is selected from the following groups: an anilino or substituted anilino group, a cyclohexyl-amino or substituted cyclohexylamino group, a group $NHZ_1$ where $Z_1$ is a heterocyclic ring, and a group

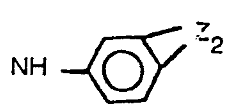

where $Z_2$ is a heterocyclic bridging group, provided that $R_1$ is hydrogen when $R_2$ is a hydroxyl group and $R_1$ is selected from the same groups as $R_3$ when $R_2$ is hydrogen.

The group $R_3$ if a cyclohexyl-amino or substituted cyclohexyl-amino group preferably has the formula:

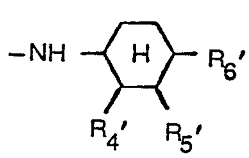

where each of $R'_4$, $R'_5$, or $R'_6$ is a substituent or hydrogen, preferably hydrogen.

The group $R_3$ if an anilino or substituted anilino group preferably has the formula

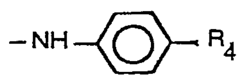

where $R_4$ is selected from the following groups: hydrogen; hydroxyl; alkyl; cycloalkyl; alkoxy; alkoxyalkoxy; aryloxy optionally of the formula

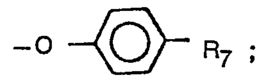

alkylamino; dialkylamino; alkylaminoalkoxy; dialkylaminoalkoxy; a nitrogen containing saturated heterocycle joined at the nitrogen atom; halogen; alkoxycarbonyl; 4-oxybiphenyl; carboxyalkyl; an anilino or substituted anilino group of the formula:

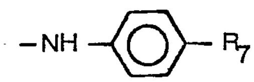

a substituted methoxy group of the formula:

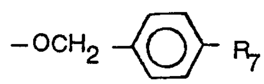

a substituted methyl group of the formula:

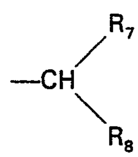

or substituted amino group of the formula:

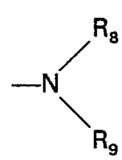

or a group of the formula:

$$—CH_2.CH_2.OH$$

where $R_7$ is hydrogen or an alkyl or alkoxy group; $R_8$ is an alkyl group and $R_9$ is a group of the formula $—CH_2CH_2OH$.

If $R_2$ is hydrogen $R_1$ is preferably the same as $R_3$.

Anthraquinone dyes of general formula (I) have been found to show reasonable order parameters, typically 0.5 or more (the precise figure depending in each case on experimental conditions, e.g. the host material and device construction). In addition they have been found to show improved stability, particularly photochemical stability, compared with the dyes containing chains of azo-linked phenyl rings referred to above.

The liquid crystal material and anthraquinone pleochroic dye are effectively in guest-host relationship and are thus suitable for use in electro-optic device applications.

The host liquid crystal material may be any liquid crystal compound or mixture of liquid crystal compounds but it has been found that mixtures of alkylcyanobiphenyls, alkyloxycyanobiphenyls and alkylcyanoterphenyls as disclosed and claimed in U.K. Patent Specifications No. 1 433 130; 1 441 571 and 1 452 826 are particularly advantageous in the present invention.

In the Formula II above the group $R_4$ may represent alkyl groups which are straight chain alkyl groups or branch chain alkyl groups which may include a chiral centre or $R_4$ may represent alkyloxy,

alkoxyalkoxy, alkyl or dialkylamino, alkyl or dialkylaminoalkoxy, or dialkyloxycarbonyl groups similarly characterised.

The properties and usefulness of a guest material are determined principally by the shape and configuration that it adopts and in particular by the shape and configuration adopted by the group $R_4$ of Formula (II) above and so long as the guest achieves a "guest-host relationship" with the host material the identity of the group $R_4$, so long as it falls within the classes delineated, is not critical.

Guest pleochroic dyes in which the group $R_4$ is selected from n-nonyloxy, p-oxy-biphenylyl, and p-dimethylamino-, are preferred when $R_2$ = OH and $R_1$, $R_5$ and $R_6$ = H; and dyes in which $R_4$ (= $R_1$) is selected from ethyl, n-pentyloxy-, and p-dimethylamino- are preferred when $R_2 = R_5 = R_6$ = H.

In accordance with a further aspect of the present invention an electro-optic device of the nematic (Freedericksz effect) or cholesteric-to-nematic phase change type includes a liquid crystal material including in solution therewith a pleochroic dye of general formula (I) above.

The present invention will now be described by way of example only with reference to the following Examples which describe the synthesis of pleochroic anthraquinone dye falling within the scope of Formula I above and Tables 2 to 5 which also give certain of their properties indicating their suitability as guest materials in the present application and also with reference to the accompanying drawings of which:

Figure 1 is a cross-section of a simple electro-optic cell in which a liquid crystal material of the present invention may be employed, and

Figures 2 to 5 are graphs illustrating the stability of pleochroic dyes employed in the present invention when exposed to ultra-violet light.

Turning now to Figure 1, an electro-optic display cell 10 is shown in cross-section and consists of two glass plates 11 and 12 separated by a spacer 13. Each of the glass plates 11 and 12 has on its inner surface a transparent electrode 14 and 15 respectively, connected to a voltage source 16 through a switch 17 connected in series. The space 18 within the electro-optic display cell 10 is filled with a guest-host liquid crystal material of the present invention. The surfaces of the electrodes 14 and 15 may be treated by one of the methods well known to those skilled in the art to control the orientation of immediately adjacent liquid crystal molecules.

The voltage source 16 provides a voltage which is normally a low frequency alternating voltage as is well understood in the art. When the switch 17 is open the applied voltage is zero and the liquid crystal molecules take up an appropriate orientation. If the device is to operate as a cholesteric to nematic phase change device the molecules are oriented in helices of cholesteric mesophase corresponding to the focal ionic texture or the planar (Grandjean) texture. In both of these instances a guest dye molecule takes up the orientation of the host liquid crystal material and the layer 18 appears strongly coloured with the colour of the guest dye molecules because a substantial proportion of the molecules are oriented perpendicular to the direction of the incidence of the light upon the cell.

When the switch 17 is closed and the voltage of the sources 16 applied across the electrodes 14 and 15 the host liquid crystal material, if of positive dielectric anisotropy, is oriented along the line of the applied field and orients the guest dye molecules in the same direction. The cell then appears clear or weakly coloured because the dye molecules do not significantly absorb light incident in the direction of the electric field, that is along the long axis of the dye molecule.

It will be understood by those skilled in the art that the electrodes may be shaped in the form of letters or numbers or other symbols sought to be displayed or there may be a multiplicity of electrodes forming individual members of symbols. Also the cell may include a reflector e.g. a white or coloured diffuse reflector, or a mirror behind the cell so as to improve the visibility of the symbol etc.

The pleochroic anthraquinone guest materials are readily prepared by methods that will be apparent to one skilled in the art of chemical synthesis and typical synthesis of specific examples are given in Examples 1 to 5 below. Temperatures are given throughout in °C.

## Example 1

Synthesis of 1-hydroxy-4-(4'-nonoxyanilino)-anthraquinone (Dye No. 16 in Table 2).

Quinizarin (51.8 g, 0.215 mol), leucoquinizarin (13.0 g, 0.054 mol), boric acid (33.7 g, 0.54 mol) and 4-nonoxyaniline (64 g, 0.27 mol) were heated under reflux in 95% ethanol (1.0 L) for 24 hours allowed to cool, and diluted with ethanol (1.0 L). The crude product was recovered by filtration, washed with ethanol (2.0 L), dissolved in hot dichloromethane (700 ml) and poured slowly into cold ethanol (3.0 L) with rapid stirring. The product was recovered by filtration and dried overnight *in vacuo.* The yield was 125 g.

The crude dye (8.0 g) was dissolved in dichloromethane and chromatographed on a column of alumina (800 g, Merck Type T basic, deactivated with 40 ml water). The fractions containing pure dye were concentrated and passed through a column of silica gel (200 g).

The dye solution was concentrated to saturation, ethanol (1.0 L) was added, and approximately 500 ml solvent was removed by distillation. The solution was set aside at 0°.

The product was recovered by filtration, washed with petrol (bpt 60—80°) and dried *in vacuo.* 1-Hydroxy-4-(4'-nonoxyanilino) anthraquinone was recovered as dark blue needles (1.3 g, 20%), m.p. 102.5—103°C. Found: C 76.0, H 7.1, N 3.0; $C_{29}H_{31}O_4N$ requires C 76.1, H 6.8, N 3.1%.

The product was found to have a solubility of 2.2% by weight in E7 at 25°C, and an absorption coefficient of 1.24 × $10^4$ at 586 nm in chloroform solution.

Example 2

Synthesis of 1-hydroxy-4(4′-N,N-dimethylamino)-anilino-anthraquinone (Dye 27 in Table 3).

4-N,N-Dimethylaminoaniline sulphate (29.25 g, 0.125 mol) and sodium hydroxide (10.0 g, 0.35 mol) were heated and stirred in 95% ethanol (500 ml) until most of the sodium hydroxide had dissolved. Quinizarin (24.0 g, 0.1 mol), leucoquinizarin (6.0 g, 0.025 mol), and boric acid (15,6 g, 0.25 mol) were then added and the mixture boiled under reflux, with stirring, for 20 hours.

The reaction mixture was allowed to cool to ambient temperature with stirring, and ethanol (1.0 L) was added. The product was recovered by filtration, washed with ethanol, and dried *in vacuo.* The yield was 35 g.

The crude dye (8.0 g) was dissolved in dichloromethane (200 ml), filtered, and adsorbed onto a column of silica gel (750 g BDH deactivated with 112.5 ml water in 1 L dichloromethane). The column was eluted with dichloromethane. The fractions containing pure dye were concentrated to 400 ml and passed through a column of alumina (20 g BDH basic activity 1, deactivated with 15% w/w water).

The dye solution was evaporated to 500 ml, ethanol (1 L.) was added, and 500 ml solvent was removed by distillation. The solution was set aside at 0°C.

The product was recovered by filtration, washed with 60—80° petrol, and dried *in vacuo.* 1-Hydroxy-4-(4′-N,N-dimethyl aminoanilino) anthraquinone was recovered as dark blue crystals, (3.7 g, 36%), m.p. 233—235°C, Found: C 73.5, H 5.2, N 7.7; $C_{22}H_{18}N_2O_3$ requires C 73.7, H 5.1, N 7.8%.

The product was found to have a solubility of 0.8% by weight in E7 at 25°C and an absorption coefficient of 1.10 × $10^4$ at 612 nm in chloroform solution.

Example 3

Synthesis of 1:5-di-(4′-ethylanilino)-anthraquinone (Dye No. 35 in Table 4).

1,5-Dichloroanthraquinone (27.7 g, 0.1 mol), anhydrous sodium acetate (17.3 g, 0.21 mol), cupric acetate (0.7 g, 0.0035 mol), p-ethylaniline (121 g, 1.0 mol) and 2-butoxyethanol (300 ml) were heated together under reflux, with stirring for 48 hours. The reaction mixture was cooled to 100° and poured into ethanol (1.0 L). The product was recovered by filtration, washed with hot water (2.0 L), and ethanol (2.0 L), and dried *in vacuo.* The yield was 24 g.

The crude dye (8.2 g) was dissolved in dichloromethane and chromatographed on a column of alumina (800 g BDH activity II). Fractions containing the pure dye were concentrated to 800 ml, ethanol (1.1 L.) was added and a further 600 ml solvent was removed by distillation. The solution was set aside at 0°C.

The product was recovered by filtration, washed with petrol (bpt 60—80°) and dried *in vacuo.* 1,5-Di-(4′-ethylanilino)anthraquinone was recovered as long purple needles (8.0 g, 54%), m.p. 217—220.5°C, Found: C 80.5, H 6.15, N 6.2%; $C_{30}H_{26}O_2N_2$ requires C 80.7, H 5.9, N 6.3%.

The product was found to have a solubility of 1.7% by weight in E7 at 25°C and an absorption coefficient of 1.58 × $10^4$ at 554 nm in chloroform solution.

Example 4

Synthesis of 1:5, di-(4′-n-pentoxyanilino)-anthraquinone (Dye No. 43 in Table 4).

1,5 Dichloroanthraquinone (19.4 g, 0.07 mol), anhydrous sodium acetate (12.11 g, 0.147 mol), cupric acetate (0.5 g, 0.0025 mol), 4-pentoxyaniline (155 g, 0.87 mol), and 2-butoxyethanol (250 ml) were heated together under reflux, with stirring, for 20 hours. The reaction mixture was allowed to cool to ambient temperature, and ethanol (1.0 L) was added slowly with stirring. The product was recovered by filtration, washed with 1.5 L ethanol and dried *in vacuo.* The yield was 30 g.

The crude dye (8.0 g) was dissolved in dichloromethane and chromatographed on a column of alumina (800 g, EDH activity II). Fractions containing pure dye were concentrated to 800 ml, ethanol (1.1 L) was added, and 600 ml solvent was distilled from the solution, which was then set aside at 0°.

The product was recovered by filtration, washed with petrol (bpt 60—80°) and dried *in vacuo.* 1,5-Di-(4-pentoxyanilino)anthraquinone was recovered as copper-coloured plates, (4.9 g, 47%) m.p. 195—196.5°; Found: C 76.8, H 7.1, N 4.9%; $C_{36}H_{38}O_4N_2$ requires C 76.8, H 6.8, N 5.0%.

The product was found to have a solubility of 0.4% by weight in E7 at 25°C and an absorption coefficient of 1.50 × $10^4$ at 557 nm in chloroform solution.

Example 5

Synthesis of 1:5-di-(4′-N,N-dimethylaminoanilino)-anthraquinone (Dye No. 52 in Table 5).

1,5-Dichloroanthraquinone (19.4 g, 0.07 mol), anhydrous sodium acetate (12.11 g, 0.147 mol), cupric acid (0.5 g, 0.0025 mol), 4-N,N-dimethylaminoaniline (100 g, 0.735 mol), and 2-butoxyethanol (250 ml) were heated together under reflux, with stirring, for 20 hours. The reaction mixture was allowed to cool to ambient temperature and poured into ethanol (1.0 L). The crude dye was recovered by filtration, washed successively with ethanol (500 ml), hot water (250 ml) and ethanol (500 ml) and dried *in vacuo.* The yield was 22 g.

The crude dye (8.0 g) was dissolved in 50% petrol: dichloromethane (300 ml) and chromatographed on a column of silica gel (750 g BDH, deactivated with 20% w/w water). Fractions containing pure dye were concentrated to 800 ml, ethanol (1.0 L) was added and a further 700 ml solvent was removed by distillation. The solution was set aside at 0°.

The product was recovered by filtration, washed with petrol (bpt 60—80°) and dried *in vacuo*. 1,5-Di-(4'-N,N-dimethylaminoanilino) anthraquinone was recovered as a blue crystalline powder (3.0 g, 25%), m.p. 234—236° (Found: C 75.7, H 6.1 $C_{30}H_{28}N_4O_2$ requires C 75.6, H 5.9%).

The product was found to have a solubility of 0.8% by weight in E7 at 25°C and an absorption coefficient of 8.5 × $10^3$ at 546 nm in chloroform solution.

Anthraquinones were prepared by the methods described above, or by modifications thereof and materials were produced having the properties set forth in Tables 1 to 5 below. It should be noted that certain of the materials are quoted in the Tables for purposes of comparison and illustrate the effect of certain molecular changes upon the properties of anthraquinones of the present invention. For example Table 1 gives absorption maxima and order parameters of three dyes described in a paper "Pleochroic Dyes with High Order Parameters" read by J Constant, E P Raynes, I A Shanks, D Coates, G W Gray and D G McDonnell atthe Sixth International Liquid Crystal Conference at Kent State University in August 1976 and published in an abbreviated form in Electronics Letters.

The absorption maxima and order parameters given in the Tables were determined in mixtures of alkylcyanobiphenyls and alkylcyanoterphenyls available from BDH Chemicals Ltd of Poole in Dorset and the mixtures used have the following compositions, all of which are given in weight per cent.

LIQUID CRYSTAL MIXTURE — E3

| | |
|---|---|
| 4-n-Pentyl-4'-cyanobiphenyl | 51.3% |
| 4-n-Pentyloxy-4'-cyanobiphenyl | 14.9% |
| 4-n-Heptyloxy-4'-cyanobiphenyl | 14.3% |
| 4-n-Octyloxy-4'-cyanobiphenyl | 19.5% |

LIQUID CRYSTAL MIXTURE — E7

| | |
|---|---|
| 4-n-Pentyl-4'-cyanobiphenyl | 51% |
| 4-n-Heptyl-4'-cyanobiphenyl | 25% |
| 4-n-Octyloxy-4'-cyanobiphenyl | 16% |
| 4-n-Pentyl-4''-cyanoterphenyl | 8% |

LIQUID CRYSTAL MIXTURE — E8

| | |
|---|---|
| 4-n-Pentyl-4'-cyanobiphenyl | 43% |
| 4-n-Propyloxy-4'-cyanobiphenyl | 17% |
| 4-n-Pentyloxy-4'-cyanobiphenyl | 13% |
| 4-n-Octyloxy-4'-cyanobiphenyl | 17% |
| 4-n-Pentyl-4''-cyanoterphenyl | 10% |

LIQUID CRYSTAL MATERIAL — E9

| | |
|---|---|
| 4-n-Propyloxy-4'-cyanobiphenyl | 15% |
| 4-n-Pentyloxy-4'-cyanobiphenyl | 38% |
| 4-n-Heptyloxy-4'-cyanobiphenyl | 38% |
| 4-n-Pentyl-4''-cyanoterphenyl | 9% |

TABLE 1

Properties of

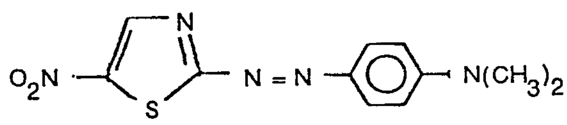

which is 2-(4-N,N-dimethylaminophenyl-azo)-5-nitrothiazole, hereinafter Dye A,

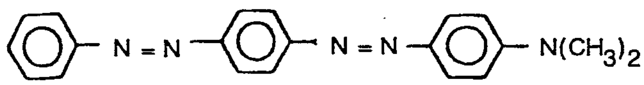

which is 4-(4-N,N-dimethylaminophenyl-azo)-azobenzene, hereinafter Dye B and

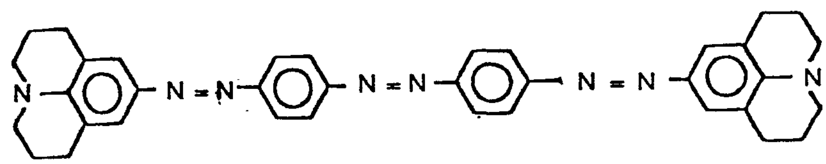

which is 4,4′-bis-(9-julolidenoazo)-azobenzene.

| Dye number | $\lambda$ max in E7 (nm) | Order parameter in E7 | melting point (°C) | |
|---|---|---|---|---|
| A | 594 | 0.70 | 264°C | |
| B | 505 | 0.75 | 201°C | |
| C | 568 | 0.79 | 235°C | (with decomposition) |

TABLE 2

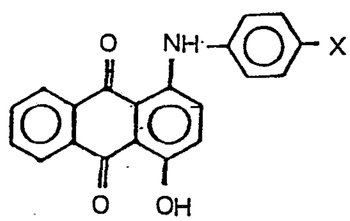

| Dye number | X | λ max in E7 | order parameter in E7 | melting point |
|---|---|---|---|---|
| 1 | H | 587 nm | 0.59 (E8) | 161–162 °C (E8) |
| 2 | $CH_3$ | 596 nm | 0.615 | 183 °C |
| 3 | $C_2H_5$ | 595 nm | 0.54 | 133.5–135 °C |
| 4 | $C_3H_7$ | 593 cm | 0.56 | 120–122 °C |
| 5 | n-$C_4H_9$ | 594 nm | 0.60 (E8) | 102.5–104 °C |
| 6 | n-$C_5H_{11}$ | 594 nm | 0.57 | 81–83 °C |
| 7 | HO– | 598 nm (E8) | 0.615 (E8) | 260–262 °C |
| 8 | $CH_3O$ | 597 nm | 0.59 | 188.5–190 °C |
| 9 | $C_2H_5O$ | 598 nm | 0.63 | 172–173 °C |
| 10 | $C_3H_7O$ | 598 nm | 0.59 | 149–150 °C |
| 11 | *n*-$C_4H_9O$ | 600 nm | 0.595 | 114.5–116 °C |
| 12 | *n*-$C_5H_{11}O$ | 598 nm | 0.62 | 99–100 °C |
| 13 | *n*-$C_6H_{13}O$ | 599 nm | 0.59 | 97.5–99 °C |
| 14 | *n*-$C_7H_{15}O$ | 596 nm | 0.62 | 99–101 °C |
| 15 | *n*-$C_8H_{17}O$ | 596 nm | 0.59 | 103.5–105 °C |
| 16 | *n*-$C_9H_{19}O$ | 596 nm | 0.65 | 102.5–103 °C |
| 17 | *n*-$C_{10}H_{21}O$ | 597 nm | 0.63 | 101.5–103 °C |

where (E8) appears in brackets after a value that value was determined in E8 not in the material mentioned in the Table headings.

TABLE 3

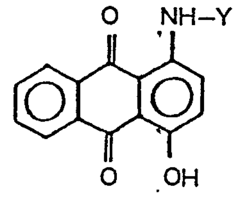

| Dye number | Y | λ max in E7 | order parameter in E7 | melting point |
|---|---|---|---|---|
| 21 | 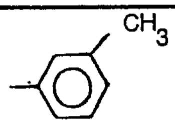 | 590 nm | 0.56 | 144–145.5°C |
| 22 | 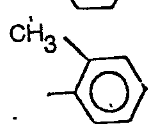 | 592 nm | 0.50 | 170–171°C |
| 23 | 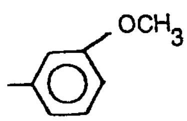 | 592 nm | 0.52 | 149–150°C |
| 24 | 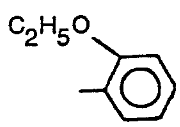 | 598 nm | 0.51 | 170–172°C |
| 25 | 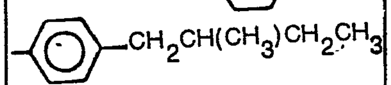 | 598 nm | 0.60 | 104–106°C |
| 26 | 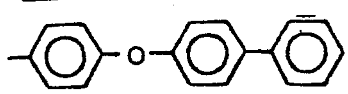 | 596 nm | 0.64 | 180–181.5°C |
| 27 | 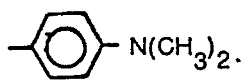 | 612 nm | 0.63 | 233–235°C |
| 28 | 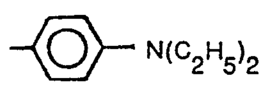 | 616 nm | 0.59 | 160–161.5°C |
| 29 | 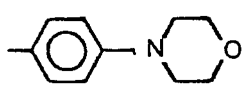 | 604 nm | 0.60 | 266–269°C |
| 30 | 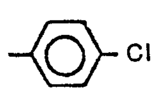 | 572 nm | 0.57 | 245–246.5°C |
| 31 | 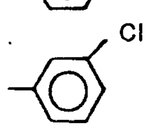 | 493 nm | 0.50 | 141–142.5°C |
| 32 | 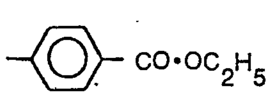 | 566 nm | 0.61 | 211–212.5°C |

Where E3 appears in brackets after a property that property was determined in E3 not E7 as mentioned in the Table heading.

TABLE 4

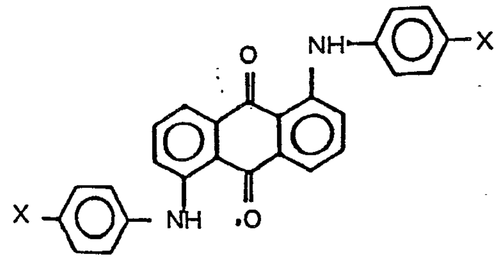

| Dye number | X | λ max in E7 | order parameter in E7 | melting point |
|---|---|---|---|---|
| 33 | H | 544 nm | 0.58 | 215.5–217°C |
| 34 | $CH_3$ | 555 nm | 0.65 | 301.5–303°C |
| 35 | $C_2H_5$ | 554 nm | 0.67 | 217–220.5°C |
| 36 | $n$-$C_3H_7$ | 556 nm | 0.65 | 176–177.5°C |
| 37 | $n$-$C_4H_9$ | 556 nm | 0.66 | 157.5–159°C |
| 38 | $n$-$C_5H_{11}$ | 555 nm | 0.63 | 154–156°C |
| 39 | $CH_3O$ | 555 nm | 0.67 | 248–250°C |
| 40 | $C_2H_5O$ | 555 nm | 0.65 | 157–158.5°C |
| 41 | $n$-$C_3H_7O$ | 555 nm | 0.625 | 224.5–227°C |
| 42 | $n$-$C_4H_9O$ | 556 nm | 0.66 | 197–198.5°C |
| 43 | $n$-$C_5H_{11}O$ | 557 nm | 0.68 | 195–196.5°C |
| 44 | $n$-$C_6H_{13}O$ | 556 nm | 0.69 | 192–193.5°C |
| 45 | $n$-$C_7H_{15}O$ | 557 nm | 0.69 | 180–187°C |
| 46 | $n$-$C_8H_{17}O$ | 556 nm | 0.69 | 165.5–167°C |
| 47 | $n$-$C_9H_{19}O$ | 556 nm | 0.68 | 156–158°C |
| 48 | $n$-$C_{10}H_{21}O$ | 556 nm | 0.67 | 146–148°C |

TABLE 5

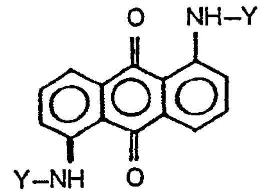

| Dye number | Y | λ max in E7 | order parameter in E7 | melting point |
|---|---|---|---|---|
| 52 | 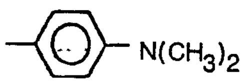 | 546 nm | 0.65 | 234–236°C |
| 53 | 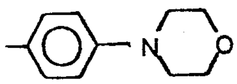 | 542 nm | 0.65 | 252–254°C |
| 54 | 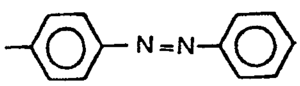 | 524 nm | 0.71 | 179–182°C |
| 55 | 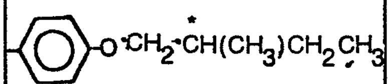 | 555 nm | 0.64 | 202–204°C |

TABLE 6

Dyes of form: 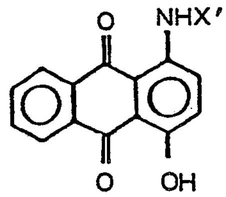

| Dye Number | X′ | λ max in E7 (nm) | Order Parameter in E7 | Melting Point (°C) |
|---|---|---|---|---|
| 57 | 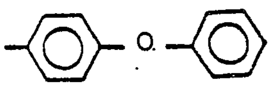 | 592 | 0.60 | 160–163.5 |
| 58 | 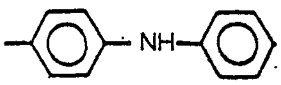 | 604 | 0.63 | 163–164.5 |
| 59 | 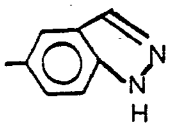 | 594 | 0.54 | 292.5–294 |
| 60 | 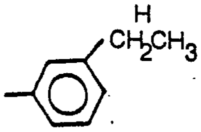 | 592 | 0.48 | 154–156 |
| 61 | 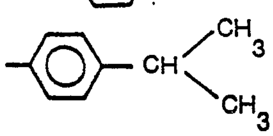 | 595 | 0.57 | 143.5–145 |
| 62 | 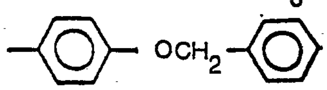 | 595 | 0.61 | 184.5–187 |
| 63 | 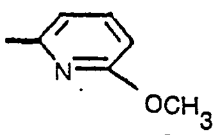 | 586 | 0.57 | 212.5–214.5 |
| 64 | 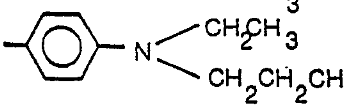 | 614 | 0.60 | 175–177.5 |
| 65 | 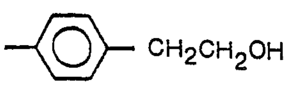 | 595 | 0.60 | 200–202 |

TABLE 7

Dyes of form: 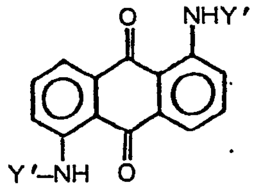

| Dye Number | Y′ | λ max in E7 (nm) | Order Parameter in E7 | Melting Point (°C) |
|---|---|---|---|---|
| 66 | 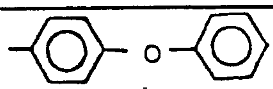 | 554 | 0.67 | 224–225.5 |
| 67 | 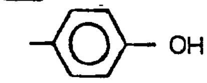 | 524 | 0.59 | 222.5–224 |
| 68 | 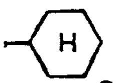 | 560 | 0.41 | 245.5–247.5 |
| 69 | 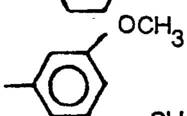 | 550 | 0.57 | 178–180 |
| 70 | 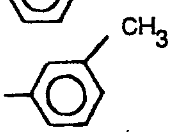 | 552 | 0.58 | 194–196 |
| 71 | 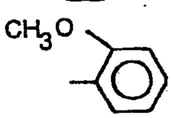 | 556 | 0.53 | 188–190 |
| 72 | 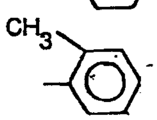 | 545 | 0.52 | 228–230 |
| 73 | 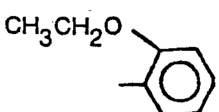 | 561 | 0.60 | 204.5–206.5 |
| 74 | 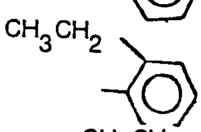 | 544 | 0.53 | 183.5–185.5 |
| 75 | 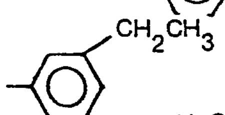 | 554 | 0.56 | 176–178 |
| 76 | 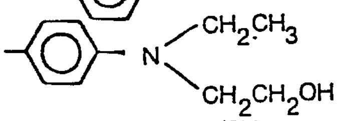 | 551 | 0.62 | 159.5–161.5 |
| 77 | 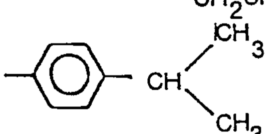 | 558 | 0.68 | 203.5–206 |
| 78 | 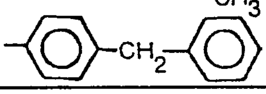 | 556 | 0.70 | 271–273 |

Certain of the dyes disclosed in the preceding Tables and Examples have been further tested in order to assess their stability under ultra-violet light and the dyes of Table 1 have been included for comparative purposes.

Example 6

Stability of materials under low level ultra-violet light.

In the following tests a General Electric F20 T12 BLB Black Light Fluorescent Lamp was used as low level ultra-violet light source and solutions of anthraquinone dyes in liquid crystal host E9 were contained in frit sealed nominally 10—12 $\mu$m thick SiO aligned cells, the filling hole being sealed with epoxy resin, and the cells placed upon a heat sink plate 15 cm from the lamp. The cells remained at room temperature.

(a) RESISTIVITY

The resistivity of the contents of the cell was measured at intervals for a period of up to 1500 hours, the mean of three determinations being taken and plotted to yield the graph displayed in Figure 2.

Resistivity measurements taken during the first few hours of such tests are not always trustworthy because, it is believed, trace quantities of metal ions are plated on to the electrodes of the cell.

Turning now to Figure 2 in which the ordinate is the resistivity of the cell measured in ohm cm on a log scale and the abscissa is time of exposure on a linear scale. The curves, which are the best fit lines drawn through experimental points represent the dyes with which they are labelled.

It will be immediately apparent from Figure 2 that the dyes of the present invention are significantly more stable than dye A.

(b) ORDER PARAMETER

Using the same type of lamp samples in solution in liquid crystal host E7 were contained in unsealed PVA aligned cells 25 $\mu$m thick placed 0.24 m away from the lamp.

Turning now to Figure 3 in which the ordinate represents the order parameter of the contents of the cell and the abscissa is time of exposure in hours, both on a linear scale, the curves again represent the dyes with which they are labelled.

Again it is clear that the dyes of the present invention, in this instance represented by dyes 52, 46 and 27 are considerably more stable than dyes A, B & C of the prior art, and also than 54. This last includes an azo —N=N— grouping and turned yellow after 24 hours. Dye C also changed colour during the first hundred hours of the test. At that time it had $\lambda$ max = 450 nm compared with 568 nm for the original dye (see Table 1).

Example 7

Stability of Materials under high power ultra-violet light.

In the following tests a Hanovia Arc Tube type 509/10 (quartz tube) with a 500 watt total output in the range 230 to >1000 nm and with peaks at 238, 254, 265, 280, 313, 366, 405, 436; and 577 nm was used as the high power ultra-violet light source.

(a) RESISTIVITY

The cells were the same as employed in Example 6 (a) using E7 as the liquid crystal host material. The cells were placed on a heat sink 20 cm from the lamp and had an average temperature of 25°C during the test. The resistivity was measured at time intervals up to a total time of 100 hours.

Figure 4, in which the ordinate is resistivity measured in ohm cm and the abscissa is time of exposure both plotted on a log scale and the curves represent the dyes with which they are labelled, gives the results.

Again, it is clear that the dyes of the present invention are more stable than the prior art dyes represented by dye A.

(b) ORDER PARAMETER

Using the same type of lamp as above samples of dye in E7 host material were placed in unsealed PVA aligned cells spaced with MYLAR (Registered Trade Mark) spacers of 25 or 25 $\mu$m 20 cm from the lamp on a heat sink plate. The cells remained at room temperature. The order parameters were measured at time intervals of up to 100 hours.

Turning now to Figure 5, in which the ordinate represents order parameter and the abscissa represents time of exposure both on a linear scale and the graphs represent the dyes with which they are labelled, the order parameter is seen to be substantially unaltered during the course of the experiment.

Although the order parameter of dye B remains substantially unaltered the dye itself was degraded and the absorbance of the cell fell from 1.12 to 0.73 progressively throughout the course of the test. This indicates progressive destruction of dye B by the UV light.

## Claims

1. A liquid crystal material including in solution therewith a pleochroic dye characterised in that the dye is an anthraquinone of the general formula:

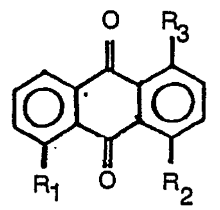

where $R_2$ is either hydrogen or a hydroxyl group, where $R_3$ is selected from the following groups: an anilino or substituted anilino group, a cyclohexyl-amino or substituted cyclohexylamino group, a group $NHZ_1$ where $Z_1$ is a heterocyclic ring, and a group

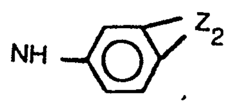

where $Z_2$ is a heterocyclic bridging group, provided that $R_1$ is hydrogen when $R_2$ is a hydroxyl group and $R_1$ is selected from the same groups as $R_3$ when $R_2$ is hydrogen.

2. A material as claimed in claim 1 and wherein the cyclohexyl-amino or substituted cyclohexyl amino group has the formula:

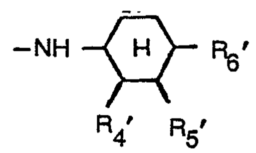

where each of $R'_4$, $R'_5$ and $R'_6$ is a substituent or hydrogen, preferably hydrogen.

3. A material as claimed in claim 1 and wherein the group $R_3$ has the formula:

$-NHZ_1$ or 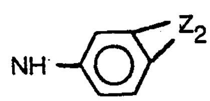

where $Z_1$ is a heterocyclic ring and $Z_2$ is a heterocyclic bridging group.

4. A material as claimed in claim 1 and wherein the anilino or substituted anilino group has the formula:

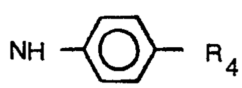

where $R_4$ is one of the following groups: hydrogen; hydroxyl; alkyl; cycloalkyl; alkoxy; alkoxyalkoxy; aryloxy optionally of the formula

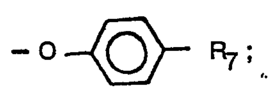

alkylamino; dialkylamino; alkylaminoalkoxy; dialkylaminoalkoxy; a nitrogen containing saturated heterocycle joined at the nitrogen atom; halogen; alkoxycarbonyl; 4-oxybiphenyl; carboxyalkyl; an anilino or substituted anilino group of the formula:

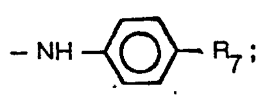

a substituted methoxy group of the formula:

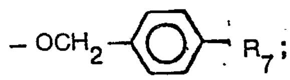

a substituted methyl group of the formula:

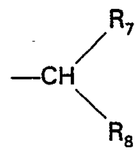 ;

a substituted amino group of the formula:

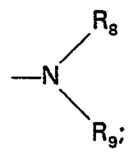 ;

or a group of the formula:

$—CH_2.CH_2.OH$;

where $R_7$ is hydrogen or an alkyl or alkoxy group; $R_8$ is an alkyl group and $R_9$ is a group of the formula $—CH_2CH_2OH$.

5. A material as claimed in any one of claims 2 to 4 and wherein the group $R_2$ is OH and the group $R_1$ is H.

6. A material as claimed in any one of claims 2 to 4 and wherein the group $R_2$ is H and the group $R_1$ is the same as the group $R_3$.

7. A material as claimed in claim 5 and wherein the anthraquinone dye has a formula:

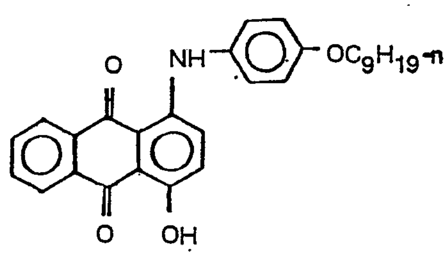

8. A material as claimed in claim 5 and wherein the anthraquinone dye has the formula:

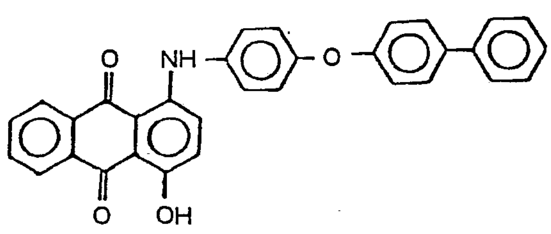

9. A material as claimed in claim 5 and wherein the anthraquinone dye has the formula:

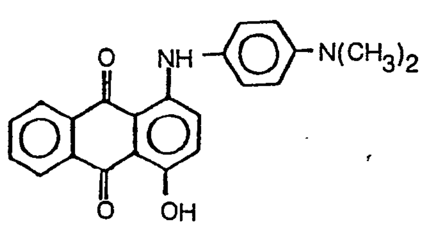

10. A material as claimed in claim 6 and where the anthraquinone dye has the formula:

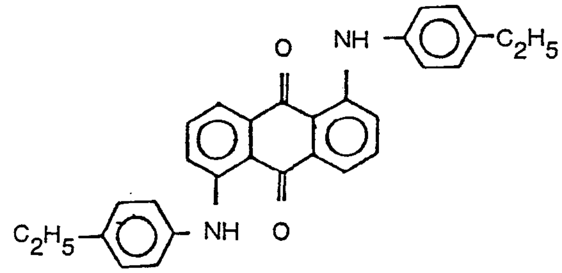

11. A material as claimed in claim 6 and wherein the anthraquinone dye has the formula:

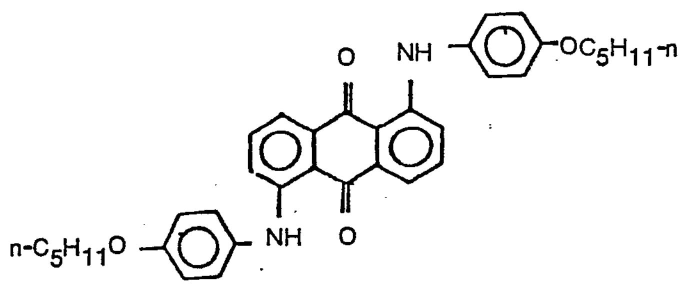

12. A material as claimed in claim 5 and wherein the anthraquinone dye has the formula:

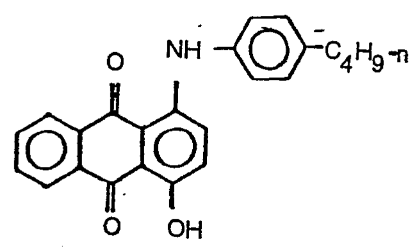

13. A material as claimed in claim 6 and wherein the anthraquinone dye has the formula:

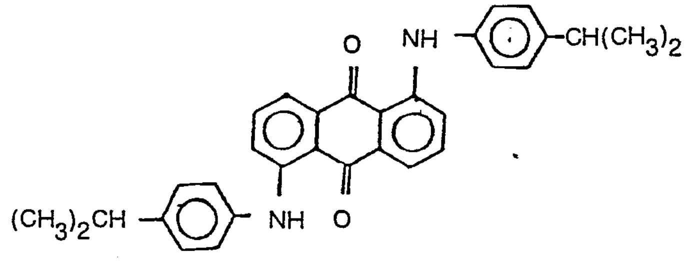

14. A material as claimed in claim 6 and wherein the anthraquinone dye has the formula:

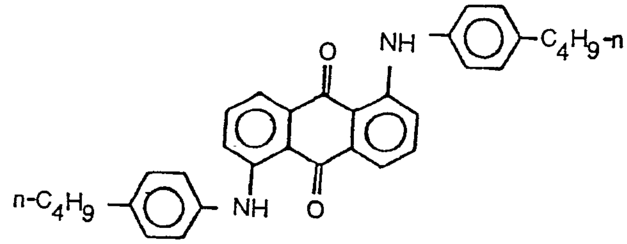

15. A material as claimed in claim 6 and wherein the anthraquinone dye has the formula:

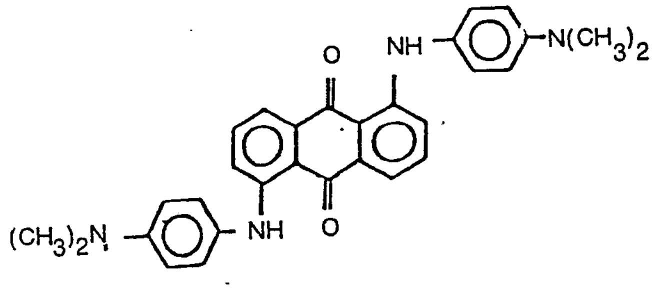

**Revendications**

1. Un matériau en cristal liquide contenant en solution une teinture pléochroique caractéristisée par le fait que la teinture est une anthraquinone de la formule générale:

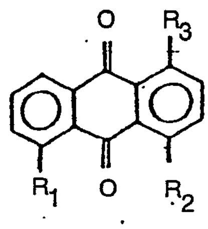

où $R_2$ est soit l'hydrogène ou un groupe hydroxyle où $R_3$ est choisi parmi les groupes suivants: un anilino ou un groupe anilino substitué, un cyclohexyle-amino où un groupe cyclohexyle-amino substitué, un groupe $NHZ_1$ ou $Z_1$ est un cycle hétérocyclique et un groupe

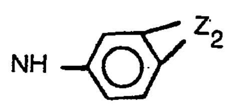

ou $Z_2$ est un groupe hétérocyclique de liaison à condition que $R_1$ est de l'hydrogène lorsque $R_2$ est un groupe hydroxyle et $R_1$ est choisi parmi les mêmes groupes que $R_3$ lorsque $R_2$ est de l'hydrogène.

2. Un matériau ainsi qu'il est revendiqué à la revendication 1 et dans lequel le cyclohexyle-amino ou le groupe cyclohexyle-amino substitué est représenté par la formule

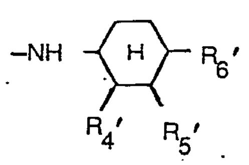

où chaque élément $R'_4$, $R'_5$, $R'_6$, est un substituant ou de préférence de l'hydrogène.

3. Un matériau ainsi que revendiqué à la revendication 1 et dans lequel le groupe $R_3$ est de la formule:

$—NHZ_1$ or 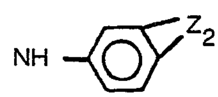

où $Z_1$ est le cycle hétérocyclique et $Z_2$ un groupe hétérocyclique de liaison.

4. Un matériau ainsi que revendiqué a la revendication et dans lequel l'anilino ou le groupe anilino substitué est de la formule:

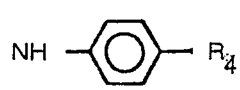

où $R_4$ est un des groupes suivants: hydrogène; hydroxyle; alcoyle; cycloalcoyle; alkoxie alkoxiealkoxie; aryloxie facultativement de la formule

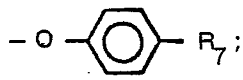

alcoylamino; dialcoylamino; alcoylaminoalkoxie, dialcoylaminoalkoxie; un hétérocycle saturé contenant de l'azote lié à l'atome d'azote; un halogène; l'alkoxycarbonyle; un 4-oxybiphényle; le carboxyalcoyle; un anilino ou un groupe anilino substitué de formule:

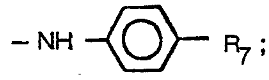

ou groupe méthoxie de la formule:

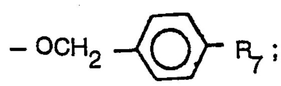

un groupe méthyle substitué de la formule

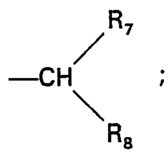

ou un groupe amino substitué de la formule:

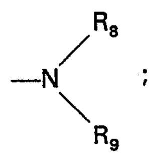

ou un groupe de la formule:

$$—CH_2.CH_2.OH;$$

où $R_7$ est de l'hydrogène ou un alcoyle ou un groupe alkoxie; $R_8$ un groupe d'alcoyle et $R_9$ un groupe de la formule:

$$—CH_2.CH_2.OH.$$

5. Un matériau ainsi que revendiqué à une quelconque des revendications 2 à 4 et dans lequel le groupe $R_2$ est OH et la groupe $R_1$ est H.

6. Un matériau ainsi que revendiqué à une quelconque des revendications 2 à 4 et dans lequel le groupe $R_2$ est H et le groupe $R_1$ est le même que le groupe $R_3$.

7. Un matériau ainsi que revendiqué à la revendication 5 et dans laquelle la teinture anthraquinone est de la formule:

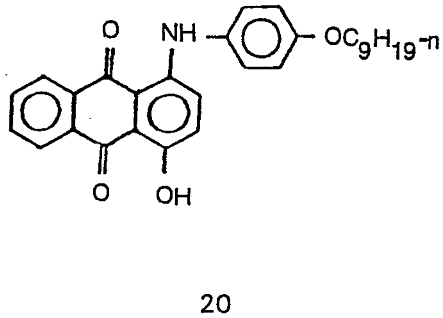

8. Un matériau ainsi que revendiqué à la revendication 5 et dans lequel la teinture anthraquinone est de la formule:

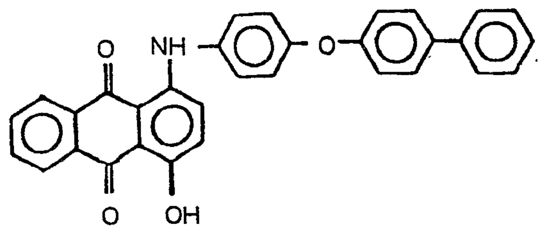

9. Un matériau ainsi que revendiqué à la revendication 5 et dans lequel la teinture anthraquinone est de la formule:

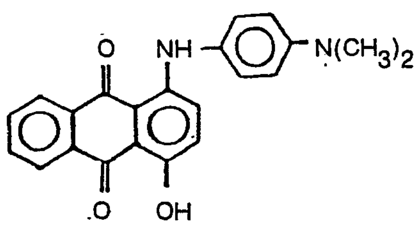

10. Un matériau ainsi que revendiqué à la revendication 6 et où la teinture anthraquinone est de la formule:

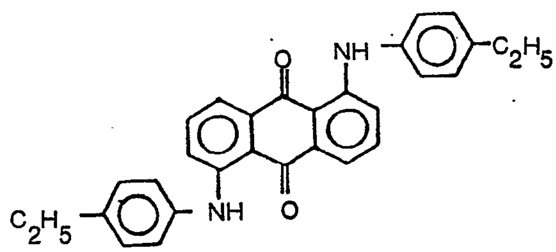

11. Un matériau ainsi que revendiqué à la revendication 6 et dans lequel la teinture anthraquinone est de la formule:

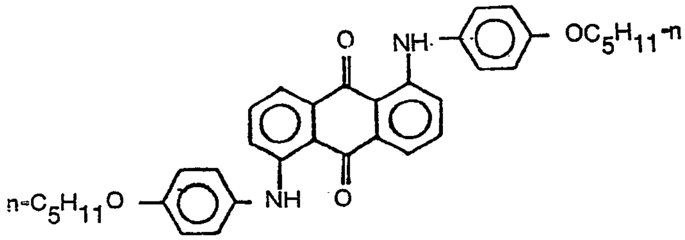

12. Un matériau ainsi que revendiqué à la revendication 5 et dans lequel la teinture anthraquinone est de la formule:

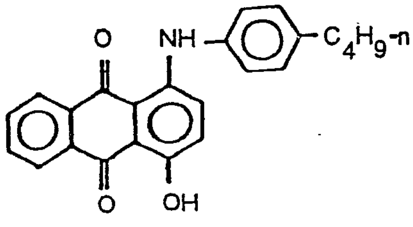

13. Un matériau ainsi que revendiqué à la revendication 6 et dans lequel la teinture anthraquinone est de la formule:

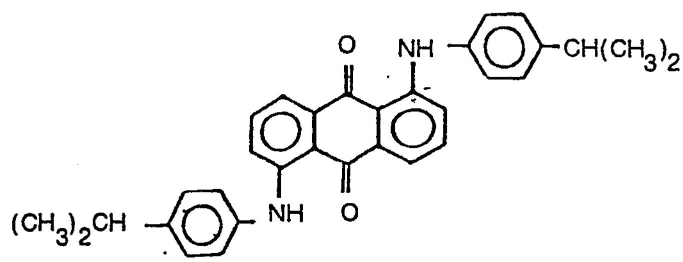

14. Un matériau ainsi que revendiqué à la revendication 6 et dans lequel la teinture anthraquinone est de la formule:

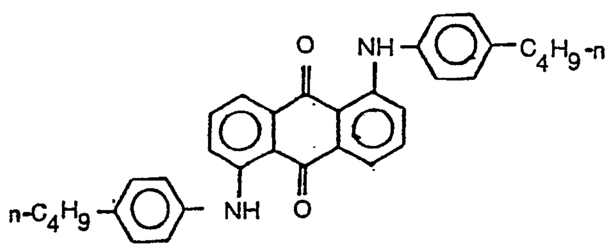

15. Un matériau ainsi que revendiqué à la revendication 6 et dans lequel la teinture anthraquinone est de la formule:

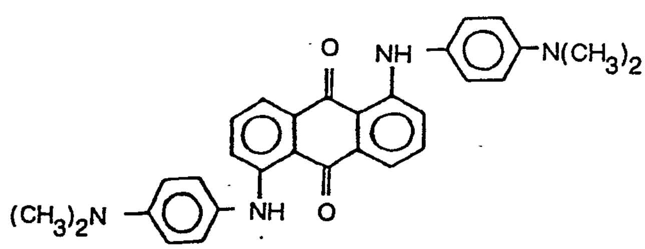

**Patentansprüche**

1. Ein Flüssigkristall-Material, das einen darin gelösten pleochroitischen Farbstoff enthält, dadurch gekennzeichnet, dass der Farbstoff ein Anthrachinon mit der generellen Formel

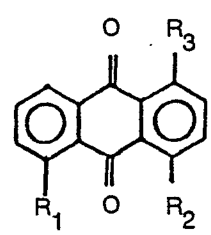

ist, wobei $R_2$ entweder Wasserstoff oder eine Hydroxylgruppe ist, und $R_3$ von den folgenden Gruppen ausgewählt wird: eine Anilidogruppe bzw. eine Anilido-Ersatzgruppe; eine Zyklohexylamidogruppe bzw. eine Zyklohexylamido-Ersatzgruppe; eine Gruppe $NHZ_1$, wobei $Z_1$ ein heterozyklischer Ring ist; und eine Gruppe

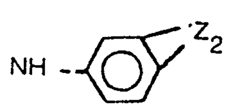

wobei $Z_2$ eine heterozyklische Brückengruppe ist, vorausgesetzt, dass $R_1$ Wasserstoff ist, wenn $R_2$ eine Hydroxylgruppe ist, und $R_1$ von denselben Gruppen wie $R_3$ ausgewählt wird, wenn $R_2$ Wasserstoff ist.

2. Ein Material wie Anspruch 1, wobei die Zyklohexylamidogruppe bzw. die Zyklohexylamido-Ersatzgruppe die folgende Formel hat:

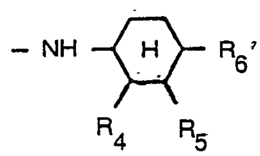

wobei jede der Gruppen $R'_4$, $R'_5$ und $R'_6$ ein Ersatzstoff oder vorzugsweise Wasserstoff ist.

3. Ein Material wie Anspruch 1, wobei die Gruppe $R_3$ die Formel

—NHZ, oder 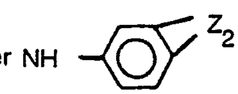

hat, wobei $Z_1$ ein heterozyklischer Ring ist, und $Z_2$ eine heterozyklische Brückengruppe ist.

4. Ein Material wie Anspruch 1, wobei die Anilidogruppe bzw. die Anilido-Ersatzgruppe die Formel

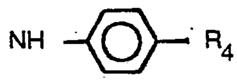

hat, wobei $R_4$ eine der folgenden Gruppen ist: Wasserstoff; Hydroxyl; Alkyl; Zykloalkyl; Alkoxy; Alkoxyalkoxy; Aryloxy wahlweise mit der Formel

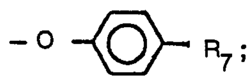

Alkylamido; Dialkylamido; Alkylamidoalkoxy; Dialkylamidoalkoxy; ein Stickstoffhaltiger gesättigter Heterozyklus mit Stickstoffatom als Bindeglied; Halogen; Alkoxycarbonyl; 4-oxybiphenyl; Carboxyalkyl; eine Anilidogruppe bzw. eine Anilido-Ersatzgruppe mit der Formel

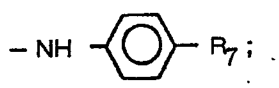

eine Methoxy-Ersatzgruppe mit der Formel

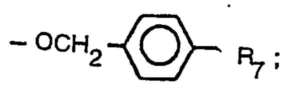

eine Methyl-Ersatzgruppe mit der Formel

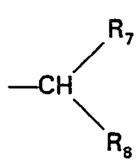

eine Amido-Ersatzgruppe mit der Formel

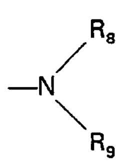

oder eine Gruppe mit der Formel

$—CH_2.CH_2.OH;$

wobei $R_7$ Wasserstoff oder eine Alkyl- bzw. eine Alkoxygruppe ist, $R_8$ eine Alkylgruppe ist, und $R_9$ eine Gruppe mit der Formel $—CH_2CH_2OH$ ist.

5. Ein Material wie irgendeiner der Ansprüche 2 bis 4, wobei die Gruppe $R_2$ OH ist, und die Gruppe $R_1$ H ist.

6. Ein Material wie irgendeiner der Ansprüche 2 bis 4, wobei die Gruppe $R_2$ H ist, und die Gruppe $R_1$ identisch mit der Gruppe $R_3$ ist.

7. Ein Material wie Anspruch 5, wobei der Anthrachinon-Farbstoff die Formel

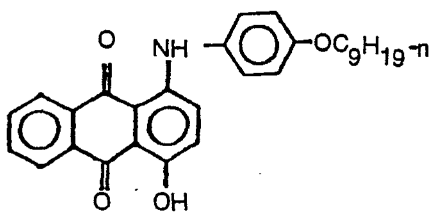

hat.

8. Ein Material wie Anspruch 5, wobei der Anthrachinon-Farbstoff die Formel

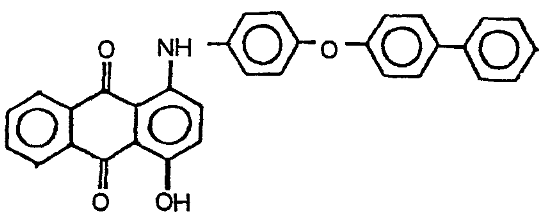

hat.

9. Ein Material wie Anspruch 5, wobei der Anthrachinon-Farbstoff die Formel

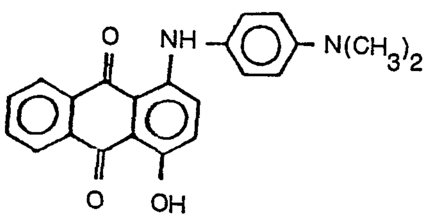

hat.

10. Ein Material wie Anspruch 6, wobei der Anthrachinon-Farbstoff die Formel

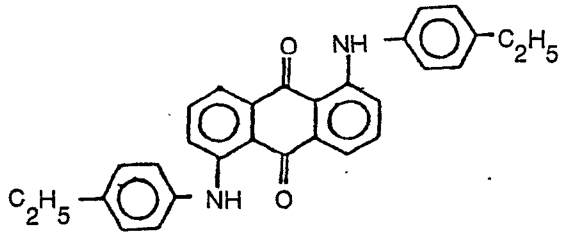

hat.

11. Ein Material wie Anspruch 6, wobei der Anthrachinon-Farbstoff die Formel

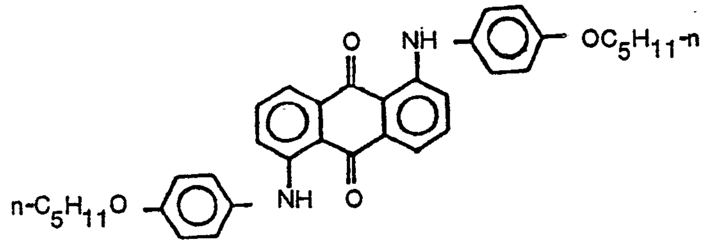

hat.

12. Ein Material wie Anspruch 5, wobei der Anthrachinon-Farbstoff die Formel

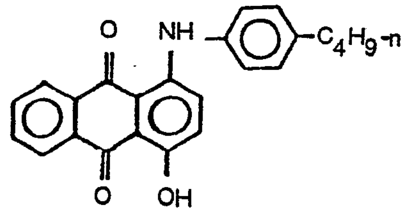

hat.

13. Ein Material wie Anspruch 6, wobei der Anthrachinon-Farbstoff die Formel

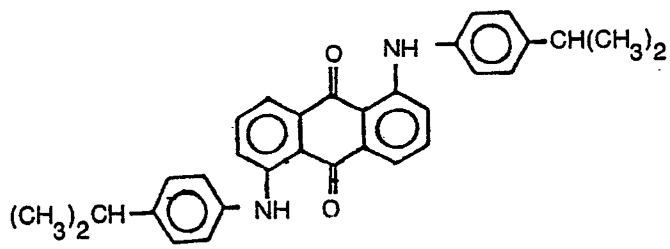

hat.

14. Ein Material wie Anspruch 6, wobei der Anthrachinon-Farbstoff die Formel

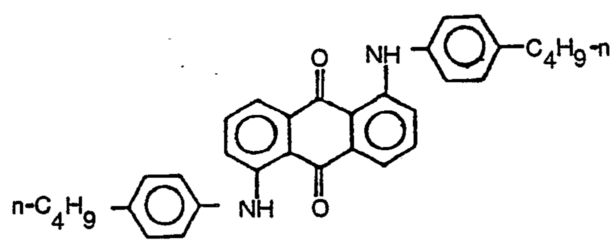

hat.

15. Ein Material wie Anspruch 6, wobei der Anthrachinon-Farbstoff die Formel

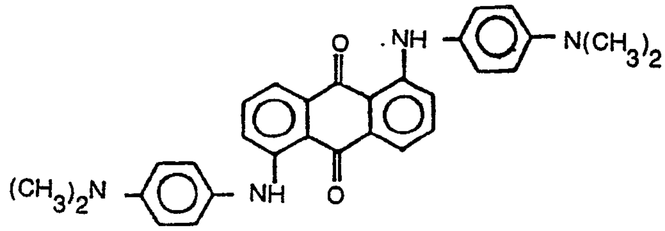

hat.

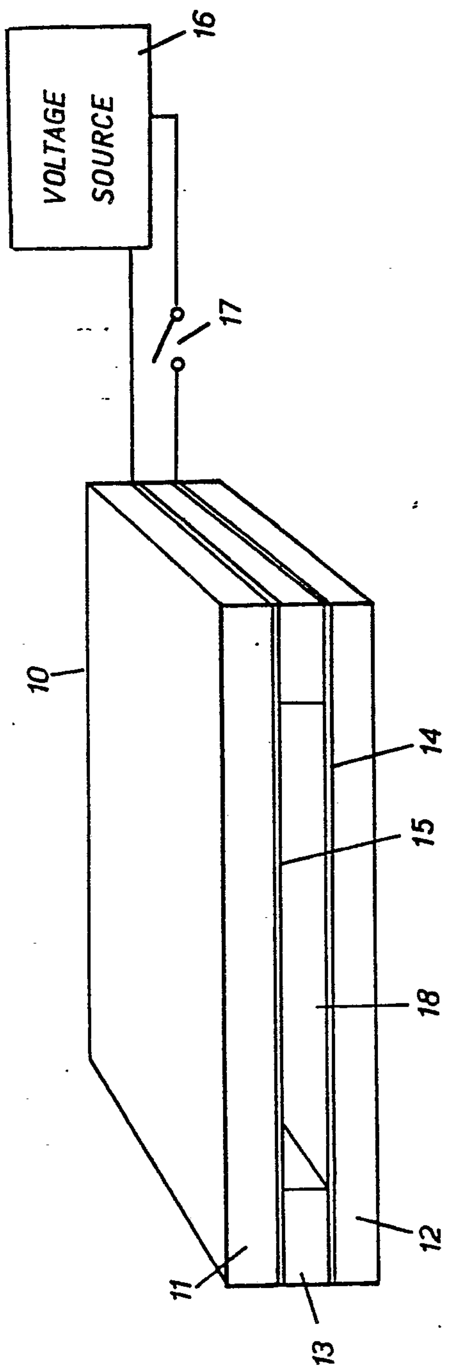


FIG. 1

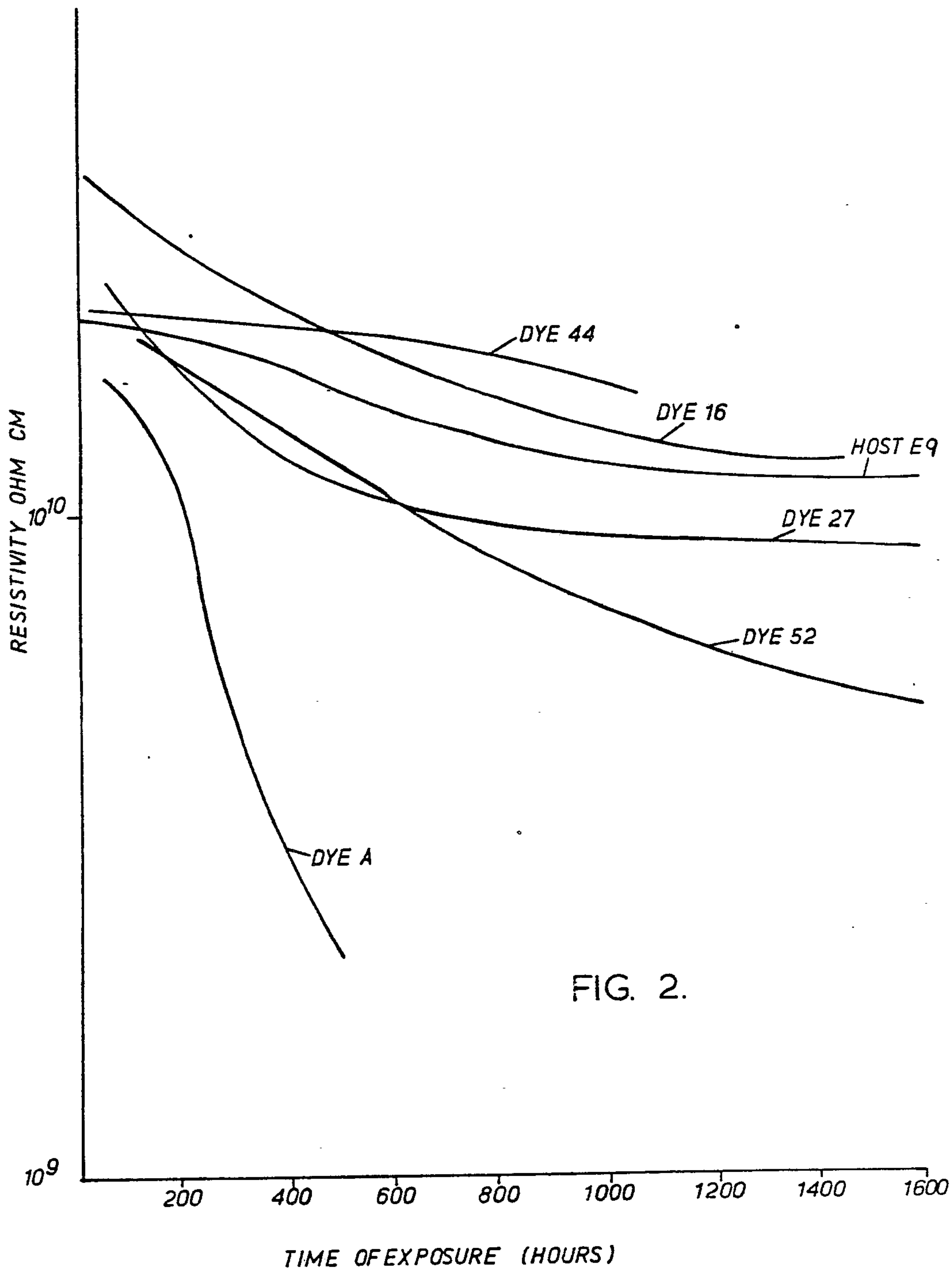
RESISTIVITY OHM CM
$10^{10}$
$10^{9}$
DYE 44
DYE 16
HOST E9
DYE 27
DYE 52
DYE A
200
400
600
800
1000
1200
1400
1600
TIME OF EXPOSURE (HOURS)

FIG. 2.

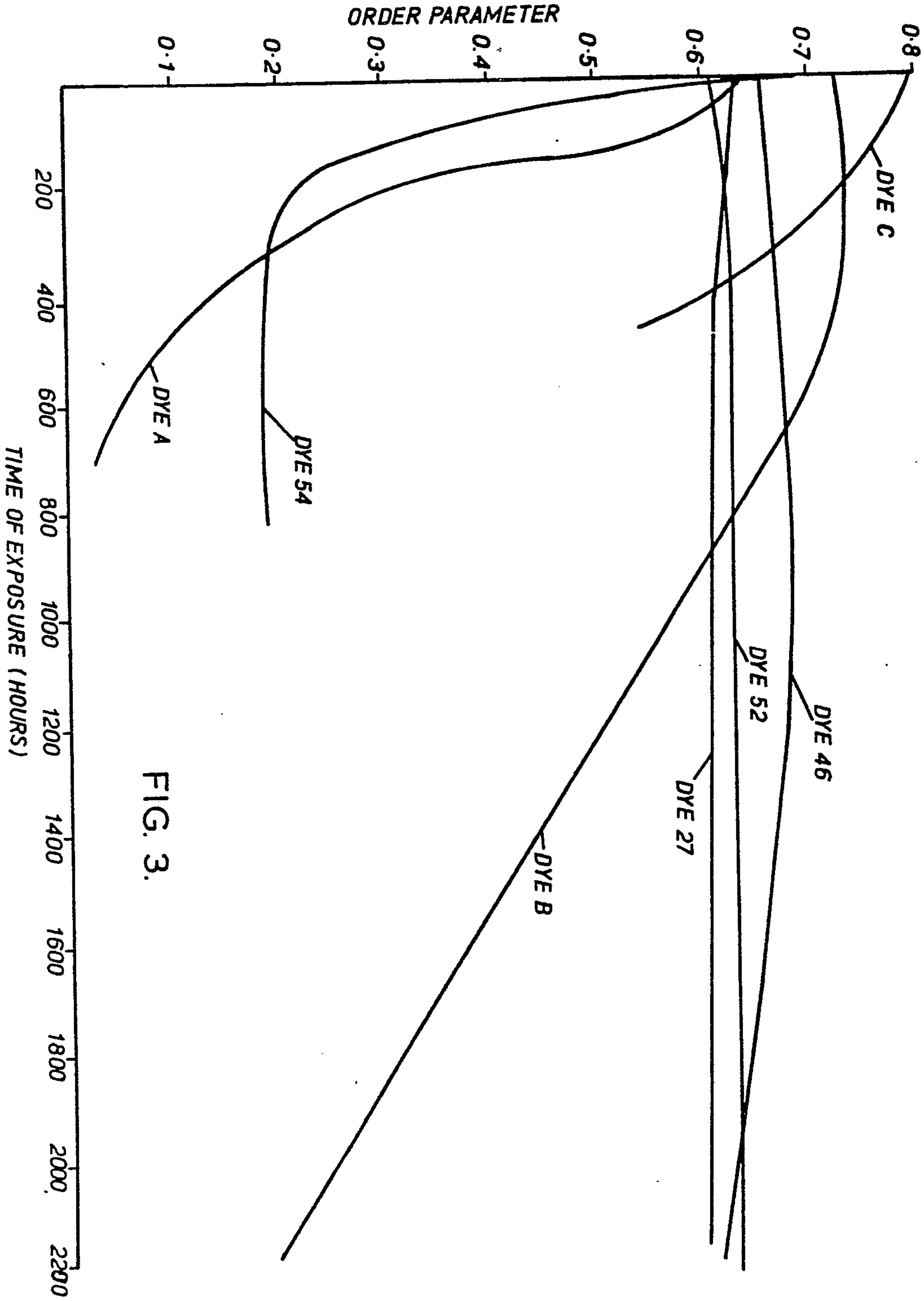
ORDER PARAMETER
0·1
0·2
0·3
0·4
0·5
0·6
0·7
0·8
TIME OF EXPOSURE (HOURS)
200
400
600
800
1000
1200
1400
1600
1800
2000
2200
DYE A
DYE 54
DYE C
DYE 46
DYE 52
DYE 27
DYE B

FIG. 3.

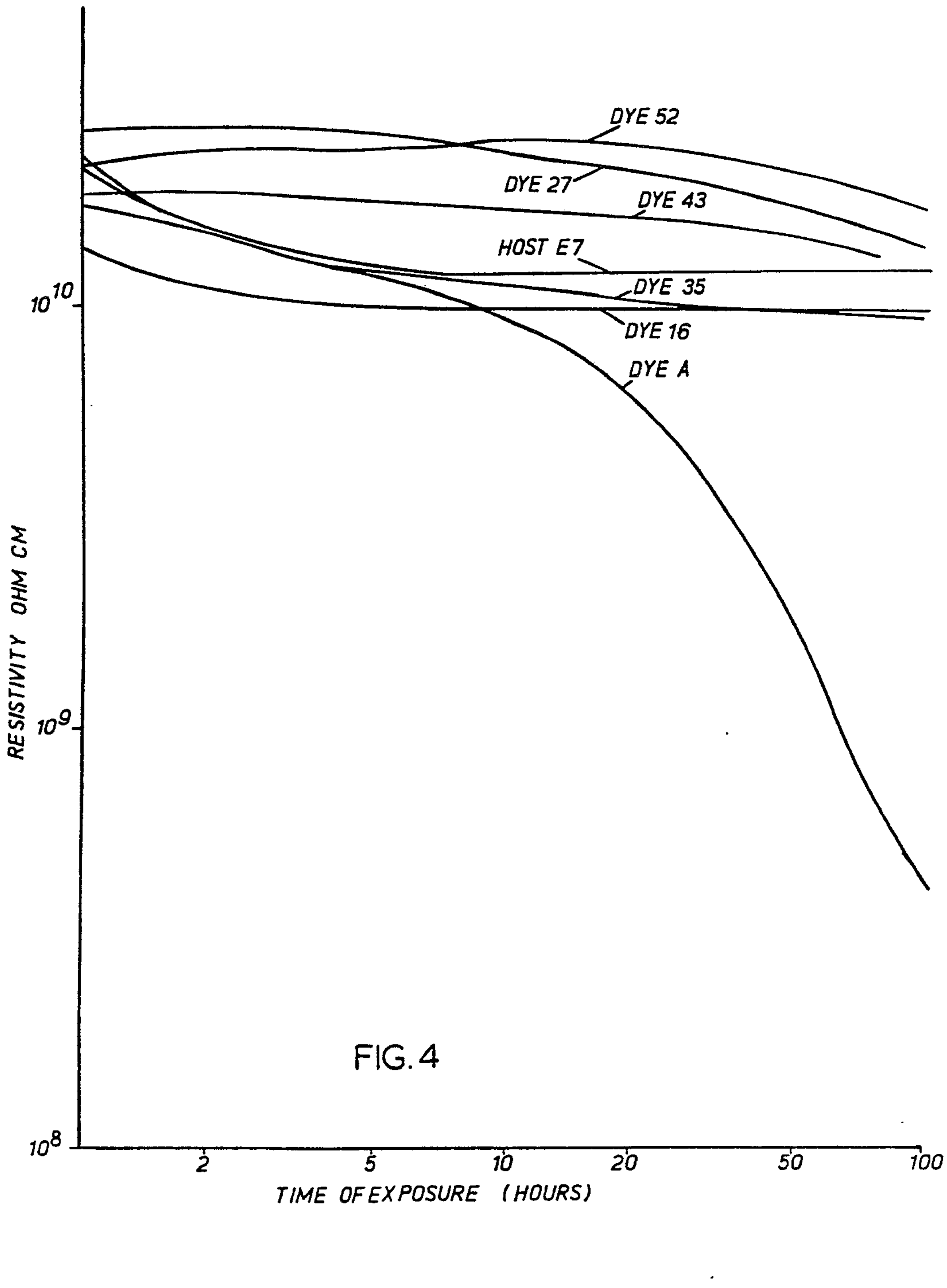
DYE 52
DYE 27
DYE 43
HOST E7
DYE 35
DYE 16
DYE A
RESISTIVITY OHM CM
10^10
10^9
10^8
2
5
10
20
50
100
TIME OF EXPOSURE (HOURS)

FIG. 4

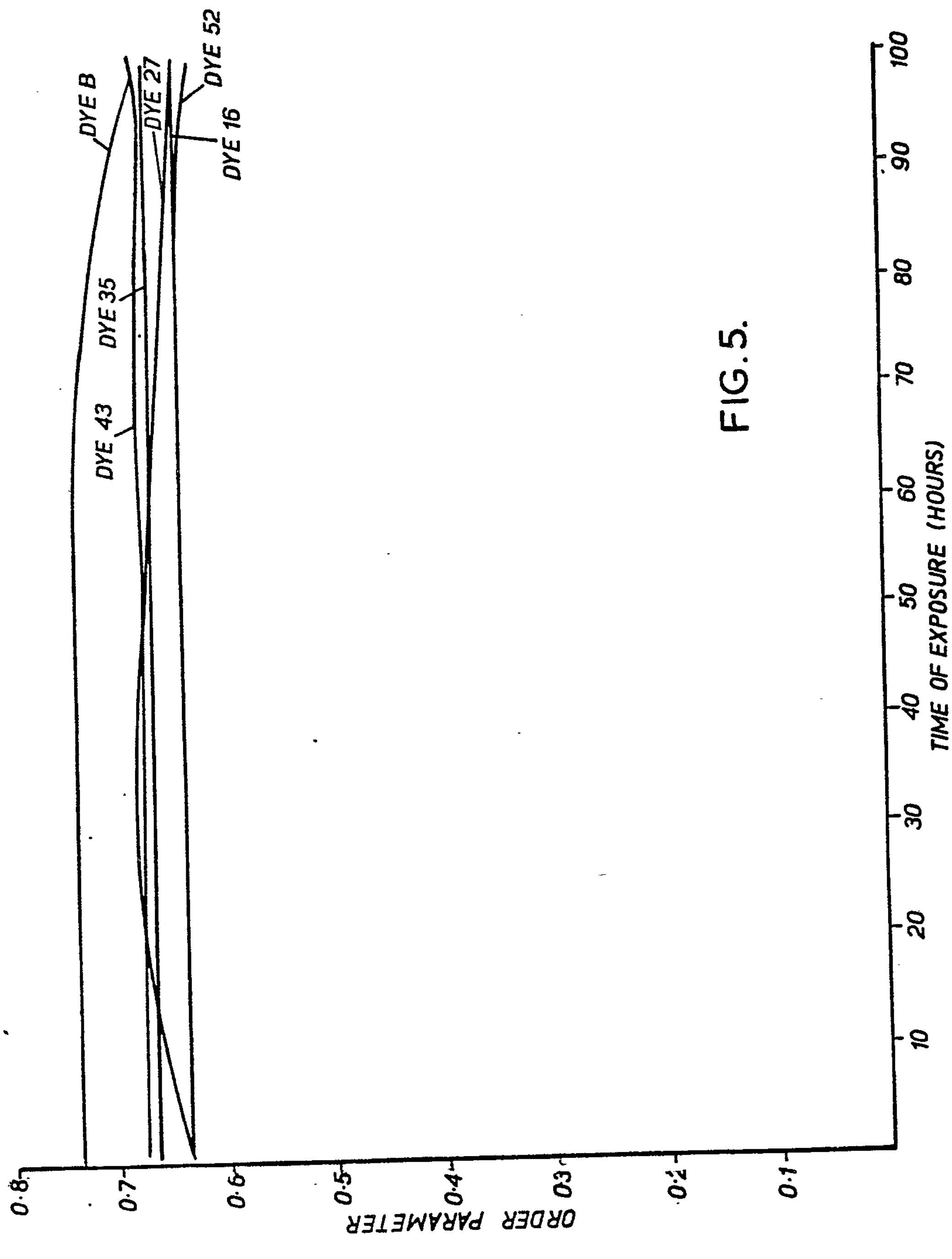
DYE B
DYE 27
DYE 52
DYE 16
DYE 35
DYE 43
10
20
30
40
50
60
70
80
90
100
TIME OF EXPOSURE (HOURS)
0·8
0·7
0·6
0·5
0·4
0·3
0·2
0·1
ORDER PARAMETER

FIG. 5.